# EUROPÄISCHE PATENTANMELDUNG

(11) **EP 0 933 568 A2**
(43) Veröffentlichungstag der Anmeldung: **04.08.1999**
(21) Anmeldenummer: 99100519.0
(22) Anmeldetag: 13.01.1999
(51) Int. Cl.: F16K 1/30

(54) **Verbindungsstück für Druckluft- oder Gasbehälter**

(30) Priorität: 14.01.1998 DE 19801003
(71) Anmelder: Atlantis Tauchsport Brümmer GmbH, 97072 Würzburg (DE)
(72) Erfinder: Brümmer, Hugo, 97204 Höchberg (DE)
(74) Vertreter: Küchler, Stefan

(57) **Zusammenfassung**

Die Erfindung richtet sich einerseits auf ein Verbindungsstück (1) zum Anschluß eines Füllventils, -schlauchs od. dgl. an Druckluft- oder Gasbehälter, mit einem einseitig offenen, etwa topfförmigen Gehäuse (5), im Bereich von dessen geschlossener Stirnseite (23) ein Element (2) zur Verbindung mit dem Druckluft- oder Gasbehälter angeordnet ist, mit einem die offene Seite (37) des Gehäuses (5) übergreifenden Anlageelement (8) zur formschlüssigen Anlage des anzuschließenden Teils und mit einem innerhalb des Gehäuses (5) beweglich aufgenommenen Element (15), das einen etwa achsparallelen Luftkanal (27) zur strömungsmäßigen Verbindung des anzuschließenden Teils mit dem Inneren (12) des topfförmigen Gehäuses (5) und durch das dort angeordnete Verbindungselement (2) weiter zu dem Druckluft- oder Gasbehälter aufweist und an seiner Mantelfläche (18) gegenüber dem Mantel des topfförmigen Gehäuses (5) abgedichtet (19) ist; andererseits auf ein System zum Be- und/oder Nachfüllen von Druckluft- oder Gasbehältern aus einer Druckquelle, mit einem an zu befüllenden Behältern festlegbaren Verbindungsstück, das eine selbstarretierende Anschlußvorrichtung für ein Füllventil oder einen Füllschlauch der Druckquelle aufweist.

## Beschreibung

Die Erfindung richtet sich auf ein Verbindungsstück zum Anschluß eines Füllventils,-schlauchs od. dgl. an Druckluft- oder Gasbehälter, insbesondere an Gasflaschen von Atemgeräten, sowie auf ein System zum Be- und/oder Nachfüllen von Druckluft- oder Gasbehältem aus einer Druckluftquelle.

Insbesondere Taucher, aber auch Rettungsdienste, Feuerwehren, usw. verwenden Atemgeräte, wobei eine Person einen ausreichenden Luft- oder Sauerstoffvorrat in Druckbehältern mit sich führt. Zum Be- und insbesondere Nachfüllen derartiger Druckbehälter dienen bisher an den Füllventilen angeordnete Schraubanschlüsse (R 5/8"). Diese Verbindungstechnik erfordert, daß das entsprechende Gegengewindestück des Füllschlauchs zunächst möglichst gerade angesetzt wird und sodann mit etwa 4 bis 5 Umdrehungen arretiert wird. Sodann können die Ventile der miteinander verbundenen Behälter geöffnet werden, das Gas strömt über, und schließlich werden die Ventile wieder geschlossen, die Schraubverbindung muß um einen entsprechenden Drehwinkel (etwa 4 bis 5 Umdrehungen) zurückgedreht und dadurch gelöst werden. Dies ist gerade in diesen kritischen Phasen, nämlich bei dem Auffüllen einer Taucherflasche an einer Unterwasser-Tauchbasis oder Nachfüllen des Sauerstoflbehälters eines Feuerwehrmanns bei einem Großeinsatz - äußerst zeit- und kraflaufwendig, darüber hinaus besteht die Gefahr, daß bei einem schiefen Ansetzen der Verbindungsstücke die Gewinde beschädigt werden und sodann die gesamte Ausrüstung zumindest vorübergehend nicht mehr einsatzfähig ist.

Aus diesen Nachteilen des vorbekannten Stands der Technik resultiert das die Erfindung initiierende Problem, ein gattungsgemäßes Verbindungsstück derart weiterzubilden, daß die Verbindung in einem kürzesten Zeitraum geschlossen als auch wieder gelöst werden kann, wobei Fehlbedienungen und -betätigungen nach Möglichkeit ausgeschlossen sein sollen. Eng damit verknüpft ist die weitere Problemstellung, ein System zum Be- und/oder Nachfüllen von Druckluft- oder Gasbehältem aus einer Druckquelle zu schaffen, wobei das Anschlußelement der Druckquelle an das erfindungsgemäße Verbindungsstück angepaßt ist.

Die Lösung des Hauptproblems gelingt bei einem gattungsgemäßen Verbindungsstück durch eine Anordnung mit einem einseitig offenen, etwa topfförmigen Gehäuse, im Bereich von dessen geschlossener Stimseite ein Element zur Verbindung mit dem Druckluft- oder Gasbehälter angeordnet ist, mit einem die offene Seite des Gehäuses übergreifenden Anlageelement zur formschlüssigen Anlage des anzuschließenden Teils und mit einem innerhalb des Gehäuses beweglich aufgenommenen Element, das einen etwa achsparallelen Luflkanal zur strömungsmäßigen Verbindung des anzuschließenden Teils mit dem Inneren des topfförmigen Gehäuses und durch das dort angeordnete Verbindungselement weiter zu dem Druckluft- oder Gasbehälter aufweist und an seiner Mantelfläche gegenüber dem Mantel des topfförmigen Gehäuses abgedichtet ist. Erfindungsgemäß wird die Arretierung der Verbindung durch Öffnen der angeschlossenen Ventile selbsttätig vorgenommen, so daß nach dem Zusammenstecken keine weiteren Handgriffe zur Arretierung notwendig sind. Durch die einfache Anordnung sind sowohl Beschädigungen als auch Fehlbedienungen nahezu vollständig ausgeschlossen. Die resultierende Zeiterspamis macht sich in kritischen Situationen bei dem Einsatz von Feuerwehr und/oder Rettungsdiensten, usf. vorteilhaft bemerkbar. Diese Vorteile werden durch die erfindungsgemäße Dichtung verwirklicht, welche das verschiebbare Element in einen mit Arbeitsdruck beaufschlagten Bereich und einen dem Umgebungsdruck ausgesetzten Bereich unterteilt, so daß die Druckdifferenz bei anliegendem Arbeitsdruck dieses verschiebbare Element fest gegen das angeschlossene Teil und dadurch dasselbe an das Anlageelement preßt.

In Rahmen der Erfindung bewegt sich eine Weiterbildung durch ein Federelement zur Erzeugung einer das bewegliche Element gegen das Anlageelement pressenden Vorspannung. Dieses Merkmal stellt sicher, daß beim Öffnen des Ventils an der Druckquelle bereits ein weitgehend dichter Übergang zu dem erfindungsgemäßen Verbindungsstück gewährleistet ist. Somit kann sich der Druck durch den Luftkanal des beweglichen Elements hindurch bis in den rückwärtigen Bereich des topfförmigen Gehäuses ausbreiten und von dort aus das bewegliche Element um so intensiver nach außen pressen, um die von der Feder erzeugte Vorspannung zu unterstützen.

Das Federelement läßt sich vorzugsweise dadurch realisieren, daß zwischen der geschlossenen Stimseite des topfförmigen Gehäuses und dem darin aufgenommenen, beweglichen Element eine auf Druck vorgespannte Feder angeordnet ist. Hier ist das Federelement einerseits vor äußeren Einflüssen geschützt und benötigt andererseits keinen zusätzlichen Rahmen.

Es hat sich als günstig erwiesen, daß an der dem Anlageelement zugekehrten Stimseite des beweglichen Elements eine die Mündung des achsparallelen Luftkanals umgebende Dichtung vorgesehen ist. Diese Dichtung stellt im Zusammenwirken mit der vorgespannten Feder sicher, daß beim Öffnen des Ventils an der Druckquelle der Druck sofort und vollständig durch den Luftkanal des beweglichen Elements bis in den rückwärtigen Bereich des topfförmigen Gehäuses geleitet wird und dadurch die Wirkung des Federelements verstärkt. Es kann somit kein indifferenter Zustand entstehen, vielmehr erhält das erfindungsgemäße Verbindungsstück eine außerordentlich hohe Zuverlässigkeit.

Besondere Vorteile ergeben sich, wenn das bewegliche Element die Form eines vorzugsweise rotationssymmetrischen Kolbens aufweist. Diese Form ist herstellungstechnisch mit geringstem Aufwand realisierbar und kann mit einer hohen Präzision gefertigt werden, so daß ein Verkanten oder ein erhöhter Verschleiß des beweglichen Elements innerhalb des topfförmigen Gehäuses ausgeschlossen werden kann.

Die Erfindung erlaubt eine Weiterbildung dahingehend, daß die Ausnehmung in dem topfförmigen Gehäuse im Bereich von dessen geschlossener Stimseite querschnittlich verbreitert ist, und daß das bewegliche Element im Bereich seiner dem Anlageelement abgewandten Stimseite eine bundartige Verbreiterung aufweist Diese Verbreiterung befindet sich dabei innerhalb des querschnittlichen verbreiterten Gehäusebereichs und findet dort genügend Bewegungsfreiheit. Die bundartige Verbreiterung kann femer die mantelseitige Dichtung aufnehmen und schafft dadurch insofem eine besonders günstige Anordnung, als der rückwärtige Bereich des beweglichen Elements eine relativ große Fläche aufweist, über die der Druck des Arbeitsmediums eine sehr große Anpresskraft erzeugen kann. Dies hat den Effekt, daß sogar in dem Fall einer Beschädigung der Dichtung in dem Bereich der vorderen Mündung des Luftkanals das teilweise seitlich ausströmende Arbeitsmedium hier nur eine vergleichsweise geringe Kraft ausüben kann, so daß die Arretierungsfunktion des bewegliche Elements dadurch noch unterstützt wird. Diese Konstruktion liefert ein außerordentlich hohes Maß an Funktionssicherheit, welches in den meisten Fällen, insbesondere bei einer ausreichend vorgespannten Feder, überhaupt nicht erforderlich ist.

Die Erfindung sieht weiterhin vor, daß an dem beweglichen Element ein Griff od. dgl. zur manuellen Betätigung angeordnet ist. Hiermit kann das bewegliche Element zum Einlegen des Anschlußelements eines Füllschlauchs od. dgl. zurückgeschoben werden. Nach Loslassen des Griffs wird das bewegliche Element durch die vorgespannte Feder wieder nach vome geschoben und preßt damit den Anschluß des Füllschlauchs gegen das Anlageelement. Der Griff kann als radialer, bspw. stiftartiger Fortsatz des beweglichen Elements ausgebildet sein und erstreckt sich vorzugsweise durch eine schlitzförmige Ausnehmung in dem topfförmigen Gehäuse nach außen.

Das Anlageelement kann nach einem weiteren Erfindungsgedanken bügelförmig ausgebildet und an zwei diametral gegenüberliegenden Bereichen des topfförmigen Gehäuses festgelegt und/oder festlegbar sein. Der alleinige Zweck dieses Anlageelements besteht darin, für den Anpressdruck des kolbenförmigen Elements ein ausreichend stabiles Gegenlager zu bilden, um eine gute Abdichtungswirkung zu gewährleisten. Um diese Aufgabe erfüllen zu können, ist das Anlageelement mit seinen beiden Enden an dem topfförmigen Gehäuse festgelegt und/oder festlegbar. Hierbei ist eine lösbare Anordnung vor allem für den Zusammenbau des erfindungsgemäßen Verbindungsstücks vorteilhaft.

Um die teilweise hohen Anpresskräfte sicher auf das topfförmigen Gehäuse ableiten zu können, ist das bügelförmige Anlageelement vorzugsweise in Bewegungsrichtung des kolbenförmigen Elements formschlüssig an dem topfförmigen Gehäuse verankert und/oder verankerbar. Hierbei macht die Erfindung von der Tatsache Gebrauch, daß formschlüssige Verbindungen naturgemäß die höchste Stabilität aufweisen und andererseits mit vergleichsweise geringem Aufwand realisierbar sind.

In weiterer Ausbildung dieses Merkmals kann vorgesehen sein, daß sowohl die Enden der Seitenschenkel des bügelförmigen Anlageelements wie auch die Verankerungsbereiche des topfförmigen Gehäuses Hinterschneidungen aufweisen, die etwa lotrecht zu der von den Bügelschenkeln aufgespannten Ebene verlaufen. Diese Hinterschneidungen können bspw. schwalbenschwanzförmig ausgebildet sein und bilden dadurch gleichzeitig eine Führungsstruktur beim Zusammenstecken der verschiedenen Teile des erfindungsgemäßen Verbindungsstücks.

Die erfindungsgemäße Anordnung läßt sich weiterhin dadurch optimieren, daß das bügelförmige Anlageelement an dem topfförmigen Gehäuse festschraubbar ist. Eine derartige Schraubverbindung kann der Justierung des bügelförmigen Anlageelements entlang der durch die formschlüssigen Hinterschneidungen gebildeten Führungsbahn zu einer Zentrierung des Anlageelements beitragen, während die hohen Axialkräfte von den Hinterschneidungen selbst übertragen werden, so daß der Schraubenschaft vor übermäßigen Scherbeanspruchungen geschützt ist.

Weitere Vorzüge bietet eine konstruktive Ausgestaltung, wobei an der dem bewegliche Element zugekehrten Seite des Mittelstegs des bügelförmigen Anlageelements ein Zentrierungselement für das Anschlußstück eines Füllventils oder -schlauchs, bspw. in Form einer Erhebung oder Vertiefung, vorgesehen ist. Dieses Zentrierungselement korrespondiert mit einem dazu komplementären Zentrierungselement an dem Anschlußstück des Füllventils oder -schlauchs und stellt sicher, daß sich das Anschlußstück beim Loslassen des Griffs bzw. beim Öffnen des Füllventils exakt in die richtige Position bewegt. Diese Wirkung kann besonders dadurch unterstützt werden, daß das Zentrierungselement als kegelförmige Erhebung oder Vertiefung ausgebildet ist, so daß die aneinanderliegenden Schrägflächen der Zentrierungselemente auch bei einem außermittigen Ansatz des Anschlußelements eine zentrierende Kraftkomponente erzeugen, so daß die Anordnung selbsttätig die optimale Position für das Anschlußelement einzustellen in der Lage ist.

Indem - wie die Erfindung weiter vorsieht - der Boden des topfförmigen Gehäuses von diesem lösbar ist, läßt sich eine querschnittliche Erweiterung der Ausnehmung dieses Teils im Bereich der verschlossenen Gehäusestimseite ohne großen Aufwand herstellen. Die Verbindung zwischen dem lösbaren Boden und dem topfförmigen Gehäuse erfolgt vorzugsweise durch ein Schraubgewinde.

Schließlich kann der vorzugsweise an der Außenseite des Gehäusebodens angeordnete Fortsatz zum Anschluß des erfindungsgemäßen Verbindungsstücks an einem zu befüllenden Druckluft- oder Gasbehälter mit einem Außengewinde versehen sein, welches mit einem entsprechenden Innengewinde an dem Füllanschluß des Druckluft- oder Gasbehälters korrespondiert und somit eine Fixierung des Verbindungsstücks mit wenigen Handgriffen erlaubt. Diese Anschlußmöglichkeit erlaubt es, auch bereits vorhandene Behälter mit dem erfindungsgemäßen Verbindungsstück nachzurüsten. Das erfindungsgemäße Verbindungsstück kann sodann an dem betreffenden Behälter verbleiben, damit zum Nachfüllen desselben keinerlei Schraubverbindungen betätigt werden müssen. Zum Befüllen wird vielmehr ausschließlich das bewegliche Element entgegen der Kraft der Feder an dem Griff zurückgeschoben, das Anschlußelement des Füllschlauchs wird zwischen das bewegliche Element und das Anlageelement geschoben, und nach Loslassen des Griffs zentriert der nach außen fahrende Kolben zunächst das Anschlußelement und preßt dieses sodann gegen das Anlageelement. Bereits zu diesem frühen Zeitpunkt tritt die stimseitige Dichtung des beweglichen Kolbens in Aktion. Nach Öffnen des Füllventils wird der Anpressdruck des beweglichen Kolbens weiter erhöht, die Verbindung ist arretiert.

Ein erfindungsgemäßes Verbindungsstück findet seinen bevorzugten Einsatzbereich im Rahmen eines Systems zum Be- und/oder Nachfüllen von Druckluft- oder Gasbehältem aus einer Druckquelle, wobei das Verbindungsstück an einem zu befüllenden Behälter festlegbar, festgelegt oder mit demselben integriert ist und eine selbstarretierende Anschlußvorrichtung für ein Füllventil oder einen Füllschlauch der Druckquelle aufweist. Das Verbindungsstück selbst kann dabei nach den oben beschriebenen Merkmalen konstruiert sein.

Demgegenüber ist es möglich, die Geometrie des Anschlußelements eines Füllventils oder -schlauchs optimal an das erfindungsgemäße Verbindungsstück anzupassen. Hierbei hat sich eine ebene Gestalt des Anschlußelements bewährt, die dessen Einklemmen zwischen einem Anlageelement und einem beweglichen Element des Verbindungsstücks begünstigt. Das Anschlußelement sollte weiterhin aus einem stabilen Werkstoff wie bspw. Metall weitgehend massiv hergestellt sein, um den hohen Klemmkräften mühelos Stand halten zu können.

Die Erfindung bevorzugt dabei eine Anordnung, wobei die Auslaßöffnung des Anschlußelements des Füllventils oder -schlauchs an einer der beiden etwa ebenen Seiten des Anschlußelements angeordnet ist. Somit kann die Auslaßöffnung auf einfachstem Weg mit dem Luftkanal in dem bewegliche Element in einer Flucht ausgerichtet werden, so daß sich besonders einfache Strömungsverhältnisse ergeben. Die Auslaßoffnung des Anschlußelements kann von einem Dichtelement umgeben sein.

Schließlich entspricht es der Lehre der Erfindung, daß an der der Auslaßöffnung gegenüberliegenden, etwa ebenen Seite ein Zentrierungselement in Form einer Vertiefung oder Erhebung vorgesehen ist. Dieses Zentrierungselement wirkt mit einem dazu komplementären Element an dem Anlageteil des erfindungsgemäßen Verbindungsstücks zusammen und bewirkt während des Arretierungsvorgangs ein selbsttätiges Zentrieren des Anschlußelements der Druckquelle gegenüber dem Verbindungsstück, derart, daß dessen Auslaßöffnung mit dem Luftkanal in dem beweglichen Element in eine gemeinsame Flucht verbracht wird. Dadurch ist gleichzeitig eine optimale Dichtungswirkung der die Mündung des Luftkanals und/oder die Auslaßöffnung des Anschlußelements umgebenden Dichtung(en) gewährleistet und somit eine Fehlfunktion ausgeschlossen. Femer ist es möglich, das Zentrierungselement des Anschlußelements mit der Betätigung des Füllventils zu koppeln, bspw. einstückig auszubilden, so daß die vorgespannte Feder nach Loslassen des Griffs das kolbenförmige Element gegen das angelegte Anschlußteil fährt, dabei eine Abdichtung bewirkt und schließlich sogar das Füllventil öffnet, wobei sodann keinerlei zusätzliche Handgriffe mehr erforderlich sind, um den Befüllungsvorgang einzuleiten. Es ergibt sich somit eine besonders bedienungsfreundliche Anordnung.

Weitere Einzelheiten, Merkmale, Vorteile und Wirkungen auf der Basis der Erfindung ergeben sich aus der nachfolgenden Beschreibung einiger bevorzugter Ausführungsbeispiele der Erfindung sowie anhand der Zeichnung.

Diese zeigt in:

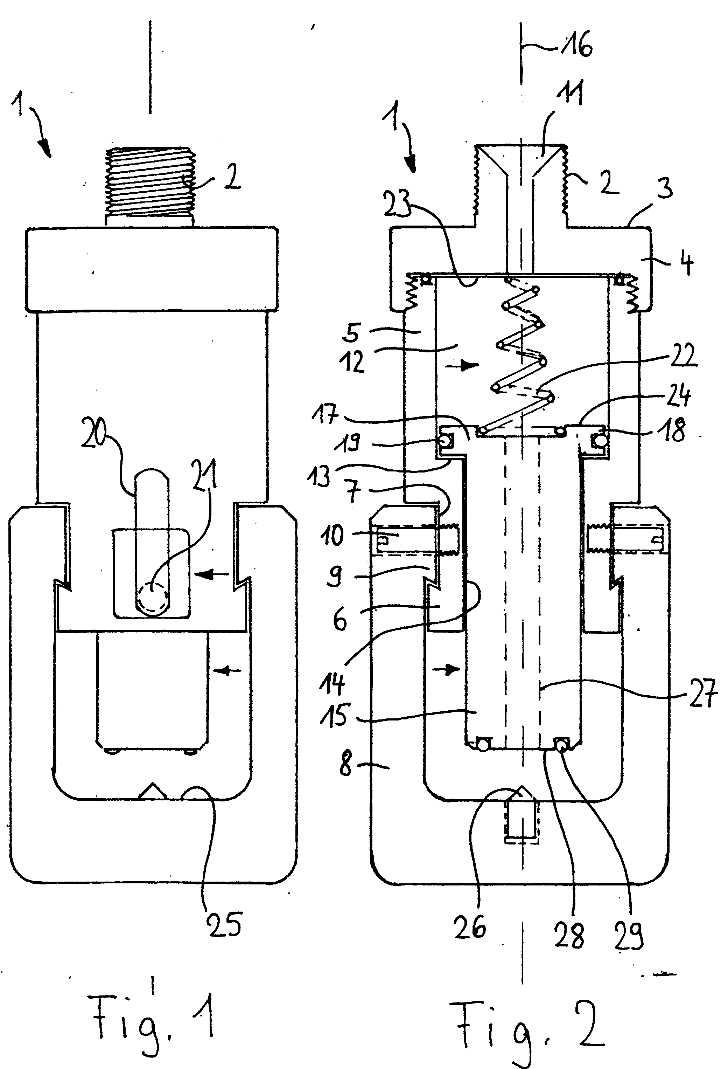

- Fig. 1: eine Seitenansicht eines erfindungsgemäßen Verbindungsstücks;
- Fig. 2: einen Längsschnitt durch die Fig. 1;
- Fig. 3: eine der Fig. 1 entsprechende Darstellung einer weiteren Ausführungsform der Erfindung; sowie
- Fig. 4: einen Längsschnitt durch die Fig. 3.

In der Zeichnung ist das erfindungsgemäße Verbindungsstück mit dem Bezugszeichen 1 versehen. Dieses wird mit einem Gewinde-Fortsatz 2 an der Gasflasche eines Atemgeräts angeschraubt. Der Gewindefortsatz 2 weist in axialer Richtung außerhalb des Gasbehälters eine schulterartige Absetzung 3 auf, so daß der Mittelbereich 4, 5 des Verbindungsstücks 1 radial erweitert ist. An seinem äußeren Bereich 6 ist der Körper 5 des Verbindungsstücks 1 mit einer schwalbenschwanzförmigen Hinterschneidung 7 versehen, in welche ein querschnittlich etwa U-förmiges Anlageelement 8 mit einer komplementären Profilierung 9 eingreift. Dieses U-förmige Anlageelement 8 ist innerhalb der Längsmittelebene des Verbindungsstücks 1 mittels radial durch die Profilierung 7, 9 hindurchgeschraubter Feststellschrauben 10 arretiert.

Der Gewinde-Fortsatz 2 ist von einer achsparallelen Bohrung 11 durchsetzt, welche sich innerhalb des Körpers 5 des Verbindungsstücks 1 zu einer zylindrischen Kammer 12 erweitert. In einem vorderen Bereich des Körpers 5 verjüngt sich die Kammer 12 schulterartig 13. Innerhalb des verjüngten Bereichs 14 ist ein Kolben 15 in Richtung der Längsachse 16 des Verbindungsstücks 1 verschiebbar aufgenommen. Dieser Kolben 15 ist an seinem der Kammer 12 zugewandten Ende 17 entsprechend dem Durchmesser der Kammer 12 erweitert 18 und in diesem Bereich mit einer Abdichtung in Form eines Gummirings 19 versehen.

Innerhalb des Mittelteils 5 des Verbindungsstücks 1 ist ein Schlitz 20 vorgesehen, durch welchen ein radial in den Kolben 15 eingesteckter Betätigungsgriff 21 herausragt, der zum Zurückschieben des Kolbens 15 betätigt werden kann. Hierbei spannt sich eine Feder 22, die zwischen dem rückwärtigen Boden 23 der Kammer 12 und der betreffenden Stimseite 24 des Kolbens 15 eingesetzt und auf Druck vorbelastet ist.

In dieser Position kann ein Schlauch- oder Ventilanschlußstück od. dgl. zwischen dem Mittelbereich 25 des U-förmigen Anlagelements 8 und den Kolben 15 eingelegt werden. Sodann wird der Griff 21 losgelassen, und die Feder 22 fährt den Kolben 15 an das eingesetzte Ventil- oder Schlauchelement und preßt dieses gegen einen Arretierungs- und/oder Betätigungsdom 26 des U-förmigen Anlageelements 8.

Nachdem die betreffenden Ventile geöffnet worden sind, kann das Füllmedium von dem eingelegten Anschlußteil durch eine achsparallele Durchgangsöffnung 27 des Kolbens 15 und weiterhin durch die Kammer 12 und die koaxiale Öffnung 11 bis in den zu füllenden Druckbehälter strömen. Hierbei sorgt eine an der peripheren Stimseite 28 des Kolbens 15 angeordnete Dichtung 29 dafür, daß das Füllmedium nicht entweichen kann.

Sobald sich in der Kammer 12 der Arbeitsdruck aufgebaut hat, preßt dieser zusätzlich gegen die rückwärtige Stimseite 24 des verschiebbaren Kolbens 15 und unterstützt dadurch die Feder 22 bei der Arretierung des eingelegten Anschlußteils mittels des Kolbens 15.

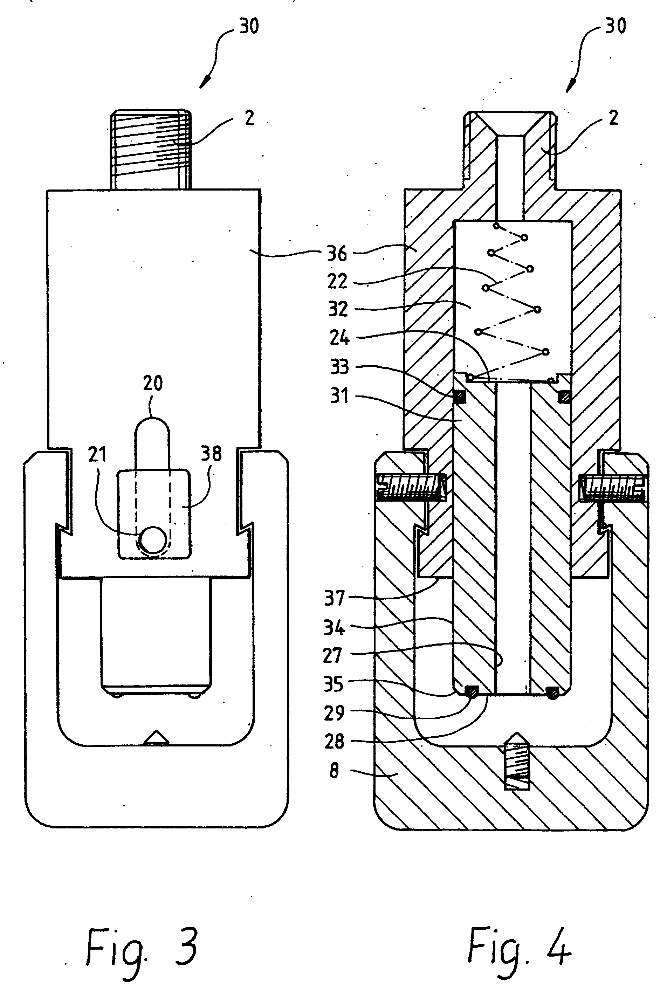

Das Verbindungsstück 30 nach den Figuren 3 und 4 unterscheidet sich von dem Verbindungsstück 1 ausschließlich dadurch, daß der den Kolben 31 aufnehmende Hohlraum 32 über seine gesamte Länge einen gleichbleibenden Querschnitt aufweist, der dem Querschnitt des beweglichen Kolbens 31 entspricht. Ein Abdichtungsring 33 ist in einer rundumlaufenden Vertiefung in der Mantelfläche 34 eingelegt und sorgt dafür, daß der über den Luftkanal 27 von der Druckquelle aufgebaute Druck in dem Hohlraum 32 vollständig erhalten bleibt. Auch bei dieser Anordnung tritt der bereits zuvor beschriebene Selbstarretierungseffekt auf, da bestenfalls der von dem Gummidichtring 29 umschlossene Bereich der vorderen Stimseite 28 des Kolbens 31 dem Arbeitsdruck des Füllmediums ausgesetzt ist, nicht jedoch der außerhalb des Dichtrings 29 verbleibende Bereich 35. Deshalb ist auch hier die von dem Fülldruck beaufschlagte Anpreßfläche 24 an der Rückseite des Kolbens 31 in jedem Fall größer als die ggf. demselben Druck ausgesetzte Fläche an der vorderen Stimseite 28 des Kolbens 31, so daß in jedem Fall eine arretierende Kraftkomponente resultiert, welche die Wirkung der vorgespannten Feder 22 unterstützt. Das Verbindungsstück 30 hat den Vorteil eines einfachen Aufbaus, da insbesondere der Gehäusebereich 36 durch Ausdrehen eines Zylinders hergestellt werden kann. Femer kann der Kolben 31 von der offenen Stimseite 37 in das Gehäuse 36 eingeschoben werden, so daß der gesamte Gehäusekörper des Verbindungsstücks 30 von dem rückwärtigen Gewindefortsatz 2 bis zu der offenen Stimseite 37 aus einem einzigen Teil hergestellt werden kann.

Der radiale Griff 21 ist vorzugsweise in einem mit Gewinde versehenen Sackloch des Kolbens 31 eingeschraubt und wird nach Einführen desselben durch den Schlitz 20 hindurch an dem Kolben 31 befestigt. Der Griff 21 kann femer mit einer Abdeckung 38 versehen sein, um den Schlitz 20 weitgehend zu verschließen.

## Patentansprüche

1. Verbindungsstück (1;30) zum Anschluß eines Füllventils, -schlauchs od. dgl. an Druckluft- oder Gasbehälter, insbesondere an Gasflaschen von Atemgeräten, gekennzeichnet durch eine Selbstarretierung mit einem einseitig offenen, etwa topfförmigen Gehäuse (5;36), im Bereich von dessen geschlossener Stimseite (23) ein Element (2) zur Verbindung mit dem Druckluft- oder Gasbehälter angeordnet ist, mit einem die offene Seite (37) des Gehäuses (5;36) übergreifenden Anlageelement (8) zur formschlüssigen Anlage des anzuschließenden Teils und mit einem innerhalb des Gehäuses (5;36) beweglich aufgenommenen Element (15;31), das einen etwa achsparallelen Luftkanal (27) zur Strömungsverbindung des anzuschließenden Teils mit dem Inneren (12;32) des topfförmigen Gehäuses (5;36) und durch das dort angeordnete Verbindungselement (2) zu dem Druckluft- oder Gasbehälter aufweist und an seiner Mantelfläche (18;34) gegenüber dem Mantel des topfförmigen Gehäuses (5;36) abgedichtet (19;33) ist.

2. Verbindungsstück (1;30) zum Anschluß eines Füllventils, -schlauchs od. dgl. an Druckluft- oder Gasbehälter, insbesondere an Gasflaschen von Atemgeräten, insbesondere nach Anspruch 1, gekennzeichnet durch ein gegenüber einem Anlageelement (8) zur formschlüssigen Anlage des anzuschließenden Teils bewegliches Element (15;31), welches derart ausgebildet ist, daß es von der Druckdifferenz zwischen dem auf seiner dem Anlageelement (8) abgekehrten Stimseite lastenden Arbeitsdruck (12) des Füllmediums und dem auf seiner dem Anlageelement (8) zugekehrten Stimseite (35) wirkenden Umgebungsdruck, insbesondere atmosphärischen Luftdruck, beaufschlagt und durch die daraus resultierende Kraft gegen das anzuschließende Teil gepreßt wird, um dieses zu arretieren.

3. Verbindungsstück nach Anspruch 1 oder 2, gekennzeichnet durch ein Federelement zur Erzeugung einer das bewegliche Element (15;31) gegen das Anlageelement (8) pressenden Vorspannung.

4. Verbindungsstück nach Anspruch 3, dadurch gekennzeichnet, dass zwischen der geschlossenen Stimseite (23) des topfförmigen Gehäuses (5;36) und dem darin aufgenommenen, beweglichen Element (15;31) eine auf Druck vorgespannte Feder (22) angeordnet ist.

5. Verbindungsstück nach einem der vorhergehenden Ansprüche, dadurch gekennzeichnet, dass an der dem Anlageelement (8) zugekehrten Stimseite (28;35) des beweglichen Elements (15;31) eine die Mündung des achsparallelen Luftkanals (27) umgebende Dichtung (29) vorgesehen ist.

6. Verbindungsstück nach einem der vorhergehenden Ansprüche, dadurch gekennzeichnet, dass das bewegliche Element (15;31) die Form eines vorzugsweise rotationssymmetrischen Kolbens aufweist.

7. Verbindungsstück nach einem der vorhergehenden Ansprüche, dadurch gekennzeichnet, dass die Ausnehmung in dem topfförmigen Gehäuse (5) im Bereich der geschlossenen Stimseite (23) querschnittlich verbreitert ist und das bewegliche Element (15) im Bereich seiner dem Anlageelement (8) abgewandten Stimseite (24) eine bundartige Verbreiterung (18) aufweist.

8. Verbindungsstück nach Anspruch 7, dadurch gekennzeichnet, dass die mantelseitige Dichtung (19) im Bereich der bundartigen Verbreiterung (18) angeordnet ist.

9. Verbindungsstück nach einem der vorhergehenden Ansprüche, dadurch gekennzeichnet, dass an dem beweglichen Element (15;31) ein Griff (21) od. dgl. zur manuellen Betätigung angeordnet ist.

10. Verbindungsstück nach Anspruch 9, dadurch gekennzeichnet, dass der Griff (21) als radialer Fortsatz des beweglichen Elements (15;31) ausgebildet ist.

11. Verbindungsstück nach Anspruch 10, gekennzeichnet durch eine schlitzförmige Ausnehmung (20) in dem topfförmigen Gehäuse (5;36), durch das der Fortsatz (21) nach außen ragt.

12. Verbindungsstück nach einem der vorhergehenden Ansprüche, dadurch gekennzeichnet, dass das Anlageelement (8) bügelförmig ausgebildet ist und an zwei diametral gegenüberliegenden Bereichen des topfförmigen Gehäuses (5;36) festgelegt undloder festlegbar ist.

13. Verbindungsstück nach Anspruch 12, dadurch gekennzeichnet, dass das bügelförmige Anlageelement (8) in Bewegungsrichtung des kolbenförmigen Elements (15;31) formschlüssig an dem topfförmigen Gehäuse (5;36) verankert und/oder verankerbar ist.

14. Verbindungsstück nach Anspruch 13, dadurch gekennzeichnet, dass sowohl die Enden der Seitenschenkel des bügelförmigen Anlageelements (8) wie auch die Verankerungsbereiche des topfförmigen Gehäuses (5;31) Hinterschneidungen (7) aufweisen, die etwa lotrecht zu der von den Bügelschenkeln aufgespannten Ebene verlaufen.

15. Verbindungsstück nach einem der Ansprüche 12 bis 14, dadurch gekennzeichnet, dass das bügelförmige Anlageelement (8) an dem topfförmigen Gehäuse (5;36) festschraubbar (10) ist.

16. Verbindungsstück nach einem der vorhergehenden Ansprüche, dadurch gekennzeichnet, dass an der dem beweglichen Element (15;31) zugekehrten Seite des Mittelstegs des bügelförmigen Anlageelements (8) ein Zentrierungselement (26) für das Anschlußstück eines Füllventils oder - schlauchs bspw. in Form einer Erhebung oder Vertiefung vorgesehen ist..

17. Verbindungsstück nach einem der vorhergehenden Ansprüche, dadurch gekennzeichnet, dass der Boden (3) des topfförmigen Gehäuses (5) von diesem lösbar ist.

18. Verbindungsstück nach einem der vorhergehenden Ansprüche, dadurch gekennzeichnet, dass im Bereich der Außenseite des Gehäusebodens (3) ein mit Außengewinde versehener Fortsatz (2) zum Aufschrauben auf einen Druckluft- oder Gasbehälter vorgesehen ist.

19. System zum Be- und/oder Nachfüllen von Druckluft- oder Gasbehältem aus einer Druckquelle, gekennzeichnet durch ein an einem zu befüllenden Behälter festgelegtes und/oder festlegbares Verbindungsstück (1;30) mit einer selbstarretierenden Anschlußvorrichtung für ein Füllventil oder einen Füllschlauch der Druckquelle.

20. System nach Anspruch 19, dadurch gekennzeichnet, dass das Verbindungsstück (1;30) nach einem der Ansprüche 1 bis 18 ausgebildet ist.

21. System nach Anspruch 19 oder 20, dadurch gekennzeichnet, dass das Anschlußelement des Füllventils oder -schlauchs eine etwa ebene Gestalt zum Einklemmen zwischen einem Anlageelement (8) und einem beweglichen Element (15;31) des Verbindungsstücks (1;30) aufweist.

22. System nach einem der Ansprüche 19 bis 21, dadurch gekennzeichnet, dass die Auslaßöffnung des Anschlußelements des Füllventils oder -schlauchs an einer der beiden etwa ebenen Seiten des Anschlußelements angeordnet ist.

23. System nach einem der Ansprüche 19 bis 22, dadurch gekennzeichnet, dass an der der Auslaßöffnung gegenüberliegenden, etwa ebenen Seite ein Zentrierungselement in Form einer Vertiefung oder Erhebung vorgesehen ist.
